# EUROPEAN PATENT APPLICATION

(11) **EP 1 235 222 A2**
(43) Date of publication of application: **28.08.2002**
(21) Application number: 02250845.1
(22) Date of filing: 07.02.2002
(51) Int. Cl.: G11B 25/04, G11B 17/22, G11B 15/68

(54) **System for hard disk drive library**

(30) Priority: 15.02.2001 US 784794
(71) Applicant: Plasmon LMS, Inc., Colorado Springs, CO 80907 (US)
(72) Inventor: Holstine, Keith, Colorado Springs, Colorado 80919 (US)
(74) Representative: Fenlon, Christine Lesley

(57) **Abstract**

A hard disk drive library system (100). A series of storage bays (110) to store a series of cartridges (140), at least one interface port (125) having a disk drive interface (160), and at least one automated picker (130) are configured in a housing (120). A delivery port (115) is available to allow the user to insert and remove cartridges from the library system. The picker removes a cartridge from its storage bay and docks it with one of the interface ports. In some embodiments, the cartridges each house a single hard disk drive (105). The cartridge includes a printed circuit board (170) with connector pads (155) and cabling (165) to electrically couple the hard disk drive to the cartridge. In some embodiments, the cartridges each house a set of hard disk drives (105). In such an embodiment, the cartridge or the interface port also includes a RAID controller so that the hard disk drives of the cartridges function as a RAID system. The library system of the present invention offers a low cost media option in a jukebox format system. The RAID embodiments offer performance and redundancy advantages over a single hard disk drive.

## Description

The present invention relates to dynamic information storage and retrieval, and particularly to a jukebox library system for hard disk drives.

In recent years, advancements in computing systems have created a need for a combination of large capacity and faster I/O. To handle the larger amounts of data, mass storage servers are often used. When choosing any type of storage device, there are many tradeoffs among access speed, data capacity, and media costs. Tapes are a cheap form of storage, but they are slow. Due to their slow access time, tapes are usually used for storing either infrequently accessed files or very large files. However, as noted in a technical journal, whenever such information is accessed there is still a demand for rapid response time. (Leana Golubchik, Richard R. Muntz, & Richard W. Watson, "Analysis of Striping Techniques in Robotic Storage Libraries," Proceedings of the 14^{th} IEEE Symposium on Mass Storage Systems (1995).)

Jukeboxes, which are robotically controlled storage libraries, have been developed to improve the efficacy of tape storage by automating nearly all data management functions. Every phase of library operations minimizes human intervention, which is the most common cause of data loss. (D.A. Thompson & J.S. Best, "The Future of Magnetic Data Storage Technology," IBM Journal of Research and Development, Vol. 44, No. 3 (1999).) A traditional tape jukebox consists of a series of bays storing a series of tapes. A robotic picker is computer controlled so that it can move any chosen tape from its storage bay and load the tape onto a tape drive unit. The entire jukebox is housed in a sealed environment to prevent contamination of the tapes. Similar jukebox libraries have also been built for optical disks. Because jukeboxes store tens or hundreds of tapes, optical disks, or other media, and because the jukeboxes can automatically swap disks and tapes in and out of the read devices, a single jukebox can effectively store much more information than a single tape drive or optical drive. This makes jukeboxes very advantageous.

Unfortunately, present day jukeboxes continue to suffer from slow response times and high cost per Megabyte of storage when compared to hard disk drive storage options. For example, a 30 Gigabyte hard disk drive unit may have a storage-to-cost ratio of 178:1, meaning it can store 178 megabytes per dollar of cost. Such a hard disk drive may have an average access time of 9 milliseconds. In comparison, one 30 Gigabyte optical drive jukebox currently on the market only has a storage-to-cost ration of 57:1, meaning it can only store 57 megabytes of storage per dollar. The optical drive also performs slower, having an average access time of 96 milliseconds. What is needed is a jukebox library which would retain the benefits of previous libraries while providing improved access time at a more affordable cost.

According to the present invention there is provided a hard disk drive library system, comprising:
a cartridge, comprising a cartridge body and at least one cartridge socket, where the cartridge can hold one or more hard disk drives; a plurality of storage bays, wherein each storage bay may hold a cartridge; at least one interface port, having a disk drive interface, for coupling with one of the cartridges; at least one picker, wherein the picker moves one of the cartridges from one of the storage bays, coupling the cartridge to one of the disk drive interfaces; and
a housing which surrounds the plurality of storage bays, the interface ports, and the pickers.

Preferred embodiments of the present invention can be regarded as a hard disk drive library system which has a series of storage bays to store a series of hard disk drives. The library system may also have at least one interface port having a disk drive interface, and at least one automated picker. These components to the system are preferably encased in a housing to prevent contamination. Hard disk drives are installed in cartridges, which comprise a cartridge housing, a cartridge socket, a printed circuit board with connector pads, and associated cabling to electrically connect the hard disk drive's power and other connectors to the cartridge. A delivery port is available to allow the user to insert and remove the cartridges of hard disk drives from the library system. The picker removes a hard disk drive cartridge from its storage bay and docks it with one of the interface ports, making the disk drive available to a computer or a network. In some embodiments, each cartridge holds more than one hard disk drive and a RAID controller is provided so that the cartridge of hard disk drives can be configured as a RAID system.

A library system embodying the present invention can offer a low cost media option in a jukebox format system. The RAID embodiments can offer extra reliability over a single hard disk drive.

For a better understanding of the present invention, and to show how the same may be carried into effect, reference will now be made, by way of example to the accompanying drawings in which:
Figure 1 is a conceptual diagram of one embodiment of the present invention ;
Figure 2 is a front perspective view of one embodiment of a hard disk drive cartridge which can be used in the present invention shown in Figure 1 ;
Figure 3 is a rear perspective view of one embodiment of a hard disk drive cartridge, showing a series of connector pads ;
Figure 4 is an exploded side perspective of one embodiment of the hard disk drive cartridge, showing the cabling and printed circuit board with connector pads; and
Figure 5 is a detailed view of one embodiment of the interface port with disk drive interface.

The present invention is a hard disk drive library system. Throughout the drawings, an attempt has been made to label corresponding elements with the same reference numbers. The reference numbers include:

| **Reference Number** | **Description** |
|---|---|
| 100 | hard disk drive library system |
| 105 | hard disk drive |
| 110 | storage bay |
| 115 | delivery port |
| 120 | library housing |
| 125 | interface port |
| 130 | picker |
| 135 | network connector |
| 140 | cartridge |
| 145 | cartridge body |
| 150 | cartridge socket |
| 155 | connector pad |
| 160 | disk drive interface |
| 162 | disk drive interface contact |
| 165 | cabling |
| 170 | printed circuit board |

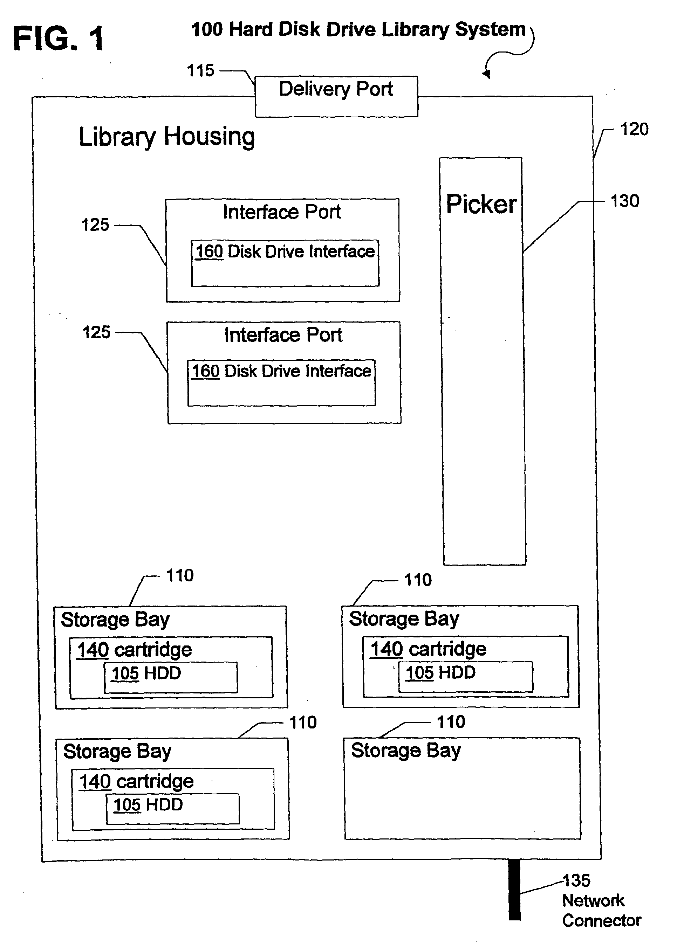

Referring to the drawings, Figure 1 shows a conceptual diagram of one embodiment of the present invention - a hard disk drive library system 100. In Figure 1, a library housing 120 encloses: one or more interface ports 125, one or more pickers 130, a series of storage bays 110, and hard disk drives 105. The library housing 120 can be made of plastic or other material, preventing contamination of the hard disk drives 105 and other components.

A delivery port 115 allows a user to insert or remove cartridges 140 from the library system 100. A network connector 135 connects the hard disk drive library system 100 to a computer or computer network.

The series of storage bays 110 are configured to accept cartridges 140 when not in use. Each cartridge 140 includes a cartridge body 145, a cartridge socket 150 which accepts a hard disk drive 105, cabling 165, and a printed circuit board 170. The cartridge body 145 is made out of plastic or other material, and is designed with features that allow the picker 130 to transport the cartridge 140 to and from the storage bays 110. The cartridge socket 150 can be constructed to allow for multiple sizes and types of hard disk drives 105, allowing a mixture of hard disk drives 105, from various manufacturers, to be used and also allowing the user to upgrade to newer, larger capacity hard disk drives 105 as desired. Each hard disk drive 105 has a power connector and other connectors (such as an ATA connector) which are traditionally hooked up when the hard disk drive 105 is installed in a computer. In the present invention, the cabling 165 is used to electrically connect the disk drive's power connector and other connectors to the connector pads 155 of the printed circuit board 170.

Turning attention to the interface ports 125, each interface port 125 accepts the docking of a cartridge 140 to its disk drive interface 160. The docking is accomplished by coupling the connector pads 155 of the cartridge 140 to a series of disk drive interface contacts 162 of the disk drive interface 160. Pogo-pins are one well-known type of connector that could be used for the disk drive interface contacts 162. Pogo-pins are a type of spring-loaded pin formed of two small tubular sections joined together with an internal spring and with a contactor formed on the end of the smaller tube; used to contact pads on a circuit board. Pogo-pins of various tip styles and contact materials are manufactured by Alpha Test Corporation, Everett Charles Technologies, Lone Star Industrial, Interconnect Devices, Inc., among other manufacturers. The disk drive interface 160 itself can be, for example, an Ultra ATA, Ultra SCSI, or 1394 (Firewire) supported by Maxtor, Seagate Technology, IBM, Quantum, and several other manufacturers.

Each picker 130 is a computer controlled robotic system which can be programmed to move any of the cartridges 140 from a storage bay 110 and interconnect the cartridge 140 (which hold a hard disk drive 105 within the cartridge socket 150) with one of the interface ports 125. Once cartridge 140 is properly seated in one of the interface ports 125, the hard disk drive 105 can be accessed by a client computer through a network connector 135 as with any other peripheral storage device.

Of course for any given embodiment of the library system 100, there can be any number of storage bays 110, cartridges 140, hard disk drives 105, interface ports 125 and pickers 130. One skilled in the art could configure the interface port 125, disk drive interfaces 160, disk drive cartridges 140, connector pads 155, disk drive interface contacts 162, and the like, using any of several techniques to provide proper docking and electrical coupling among the components.

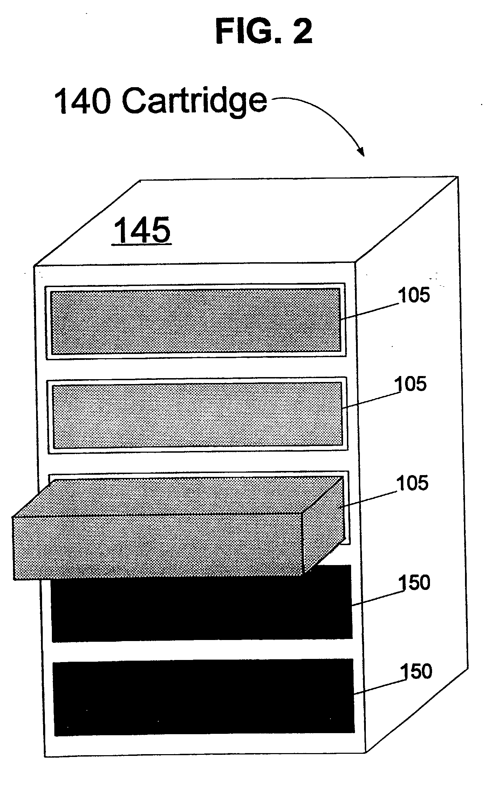

In one embodiment of the present invention, the hard disk drive library system 100 manages sets of hard disk drives rather than individual hard disk drives 105. In such an embodiment, the cartridge body 145 is larger, allowing several hard disk drives 105 to be installed within one cartridge 140. Figure 2 is a diagram showing one embodiment of such a multiple hard disk drive cartridge 140. In Figure 2, the cartridge body 145 is formed with a series of cartridge sockets 150. Each cartridge socket 150 accepts a hard disk drive 105. In this embodiment, the series of hard disk drives 105 are electrically connected to the printed circuit board 170 with cabling 165 of the cartridge 140.

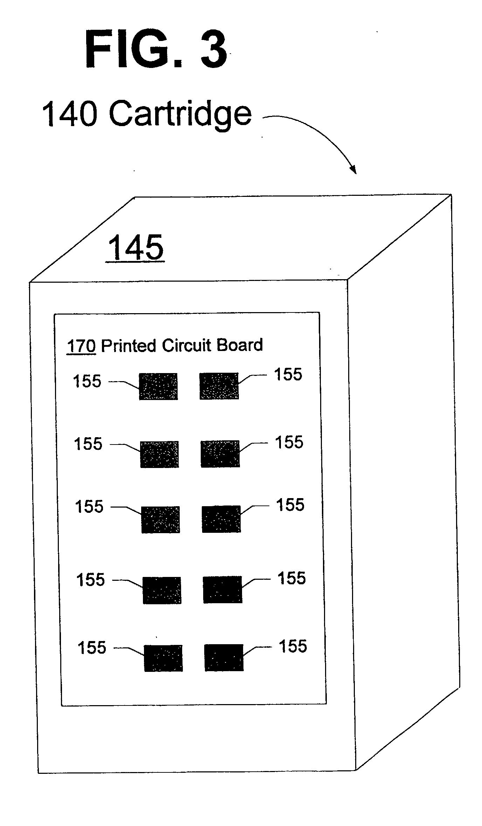

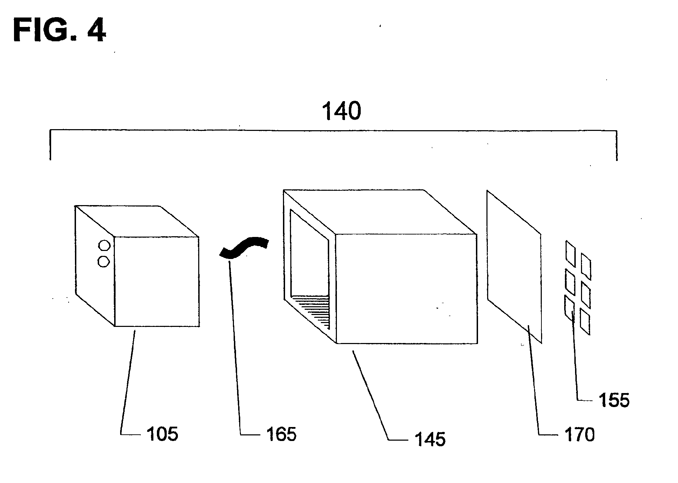

Figures 2 through 4 illustrate one embodiment of the hard disk drive cartridge 140. As previously explained, the cartridge 140 includes a cartridge body 145 and one or more cartridge sockets 150 as shown in the front view of Figure 2. Figure 3, showing the rear side of the cartridge 140, shows one configuration of a series of connector pads 155. The various connector pads 155 provide connections to the hard disk drives' power line, network connections, etc. Figure 4 shows that the cartridge 140 includes cabling 165 and a printed circuit board 170 with connector pads 155. These pads 155 will couple with the disk drive interface contacts 162 located in the interface port 125 in order to dock the cartridge 140 to the disk drive interface 160.

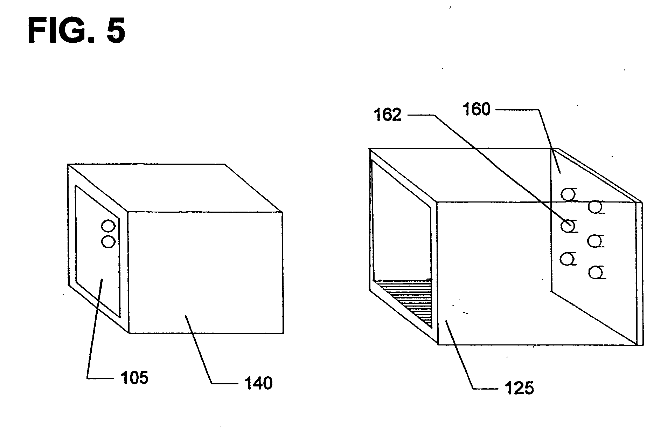

Once cabling 165 within the cartridge body 145 is used to electrically connect the hard disk drive 105 to the connector pads 155, which extend from the exterior of the cartridge 140, from the printed circuit board 170, the picker 130 can dock the cartridge 140 to one of the interface ports 125. Figure 5 is a detailed view of one embodiment of the interface port with disk drive interface. In this embodiment, the cartridge 140 (here holding just a single hard disk drive 105) is inserted into the socket opening of the interface port 125. As the hard disk drive 105 is pushed into the interface port 125, the pogo pins (or other type of disk drive interface contacts 162) located on the disk drive interface 160 couple with the cartridge's connector pads 155. The contact between the pogo pins 162 and connector pads 155 causes the hard disk drive 105 to be now available to a user computer via the network connector 135.

To summarize, to operate the hard disk drive library, the hard disk drives 105 are installed in the cartridges 140. The cartridges 140 are stored in bays 110 until requested. The picker 130 moves a desired cartridge 140 from its storage bay 110 to an interface port 125, coupling the disk drive interface 160 (via pogo pins or other connectors 162) to the connector pads 155 of the cartridge 140. The delivery port 115 allows a user to insert and remove cartridges 140 from the library system 100. The network connector 135 interfaces the library to a computer or computer network.

Prior art jukebox libraries - with their optical disk, tapes or other media - provide a dependable storage facility. However such systems have relatively slow access times and are not economical because they do not offer attractive "megabyte per dollar" or "megabyte per cubic inch" ratios. The table below compares the features of a hard disk drive storage device to two forms of optical storage:

| **Feature** | **Sample Hard Disk Drive** | **Sample Optical Drive #1** | **Sample Optical Drive #2** |
|---|---|---|---|
| Storage Capacity | 30 GB | 30 GB | 5.2 GB |
| Access Time | 9 msec | 96 msec | 25 msec |
| Media Cost | $169 | $525 | $70 |
| Media Dimensions | 1.0 x 4.0 x 5.8 inches | 0.6 x 12.5 x 13.3 inches | 0.4 x 5.3 x 6.0 inches |
| Media Volume | 23.2 in³ | 99.8 in³ | 12.7 in³ |
| MByte/$ | 178 | 57 | 74 |
| MByte/in³ | 1290 | 301 | 409 |

As the above table illustrates, hard disk drive storage offers more megabytes of storage both per dollar and per cubic inch, making hard disk drives preferable over optical drives. Of course, cost is irrelevant if the media used is unreliable. Once data is written to an optical disk, it is very durable and has a long storage life without degradation. In contrast, hard disk drives can lose data when there is a head crash in the drive. Thus, prior library systems have not used hard disk drives as a storage medium.

The present invention, however, can be used to overcome the hazards of the unreliability of disk drives for long term storage. In one embodiment of the present invention, a cartridge 140 can be configured to hold a series of hard disk drives 105 and the printed circuit board 170 of the cartridge 140 can include circuitry for a RAID controller. (Alternatively, a RAID controller could be coupled to the interface port 125 so that the hard disk drive library system 100 would only require a single RAID controller.) RAID ("redundant array of independent disks") systems are well known in the art. A RAID system is an array of disk drives which are presented to a host computer as a single disk. RAID systems can offer performance advantages, redundancy advantages, or a combination of both, in comparison to traditional single hard disk drives.

For example, in one embodiment of the present invention, the hard disk drives 105 of a cartridge 140 can be configured as a RAID-5 system. In such a system, data and parity data is distributed across the disk drives. Because the data is striped across more than one disk drive, the system is performance oriented. Because parity data is also stored, the system offers redundancy. Should a hardware failure cause data corruption, the offending disk drive can be cold swapped with a new replacement and the data can be recovered based on the parity data. Alternatively, a RAID controller could be coupled to the interface port 125 so that the hard disk drive library system 100 would only require a single RAID controller.

In practice, the hard disk drive library 100 of the present invention is connected directly to a computer or to a computer network via the network connector 135. The user can insert hard disk drives 105 into a cartridge 140 and then into the library system via the delivery port 115. Through his or her computer system, the user can instruct the hard disk drive library system 100 to load any of the hard disk drive cartridges 140 upon request. As is well known in the art, the library system 100 can track in memory the correlation between cartridges 140 and their storage bays 110. Alternatively, each hard disk drive cartridge 140 can be labeled with a bar code, other graphical tag, an RF tag, etc. so that the picker 130 can easily identify the hard disk cartridges 140.

Once the cartridge 140 is identified, the picker chooses an available interface port 125. If all interface ports 125 have cartridges 140 installed, then one of the hard disk drive cartridges 140 is removed from one of the interface ports 125 and placed in a storage bay 110. Then the picker 130 can take the desired cartridge 140 and dock it to the available interface port 125, causing the hard disk drive 105 (or RAID system of hard disk drives) to be electrically coupled to the disk drive interface 160 within the interface port 125 via the cartridge 140. In this way, the disk drive(s) are available to the user's computer.

From the foregoing detailed description, it will be evident that there are a number of changes, adaptations and modifications of the present invention which come within the province of those skilled in the art. However, it is intended that all such variations not departing from the spirit of the invention be considered as within the scope thereof.

## Claims

1. A hard disk drive library system (100), comprising:
a cartridge (140), comprising a cartridge body (145) and at least one cartridge socket (150), where the cartridge can hold one or more hard disk drives (105) ;
a plurality of storage bays (110), wherein each storage bay may hold a cartridge;
at least one interface port (125), having a disk drive interface (160), for coupling with one of the cartridges;
at least one picker (130), wherein the picker moves one of the cartridges from one of the storage bays, coupling the cartridge to one of the disk drive interfaces; and
a housing (120) which surrounds the plurality of storage bays, the interface ports, and the pickers.

2. The hard disk drive library system of claim 1, further comprising a delivery port (115) coupled to the housing, for allowing a user to insert and remove cartridges from the hard disk drive library system.

3. The hard disk drive library system as claimed in claim 1 or 2, wherein at least one of the interface ports is an ultra ATA interface.

4. The hard disk drive library system as claimed in claim 1 or 2, wherein at least one of the interface ports is an Ultra SCSI interface.

5. The hard disk drive library system as claimed in claim 1 or 2, wherein at least one of the interface ports is a 1394 (Firewire) type interface.

6. The hard disk drive library system as claimed in any preceding claim, wherein the disk drive interface of the interface port comprises at least one spring-activated pin for coupling to the cartridge.

7. The hard disk drive library system as claimed in any preceding claim, wherein the cartridge further comprises at least one connector (135) for coupling the cartridge to the disk drive interface of the interface port, a printed circuit board (170) and cabling (165), where the cabling connects at least one of the hard disk drives to the printed circuit board and where the printed circuit board is electrically connected to the connector.

8. The hard disk drive library system as claimed in any preceding claim, wherein the cartridge further comprises features for allowing the picker to move the cartridge.

9. The hard disk drive library system as claimed in any preceding claim, wherein the hard disk drives that make up the cartridges form a RAID system.

10. The hard disk drive library system of claim 9, further comprising a RAID controller coupled to the cartridge, for providing management of the RAID system of hard disk drives.

11. The hard disk drive library system of claim 9, further comprising a RAID controller coupled to the interface port, for providing management of the RAID system of hard disk drives.

12. A cartridge for a hard disk drive library system, comprising:
a cartridge body (145);
at least one cartridge socket (150) within the cartridge body, where each cartridge socket can hold a hard disk drive (105);
at least one connector pad (155) which is coupled to the hard disk drive, for allowing the hard disk drive to dock with a disk drive interface (160) while remaining inserted in the cartridge body.

13. The cartridge for a hard disk drive library system of claim 12, further comprising cabling (165) for coupling the connector pad to the hard disk drive.

14. The cartridge for a hard disk drive library system of claim 12 or 13, further comprising features constructed on the exterior of the cartridge body, for allowing a robot picker (130) of the library system to transport the cartridge.

15. The cartridge for a hard disk drive library system of claim 12, 13 or 14, further comprising a circuit board (170) coupled to the connector pad, for providing circuitry to couple the connector pad to the hard disk drive.

16. The cartridge for a hard disk drive library system of any one of claims 12, 13, 14 or 15, further comprising a RAID disk controller, for operating the hard disk drives installed in the cartridge as a RAID system.
